# EUROPEAN PATENT SPECIFICATION

(11) **EP 4 253 998 B1**
(45) Date of publication and mention of the grant of the patent: **28.01.2026**
(21) Application number: 22165397.5
(22) Date of filing: 30.03.2022
(51) Int. Cl.: G01S 7/481, G01S 17/42, G01S 17/89, G01S 17/931

(54) **LIDAR UNIT WITH DIFFRACTIVE OPTICAL ELEMENT**
LIDAR-EINHEIT MIT DIFFRAKTIVEM OPTISCHEN ELEMENT
UNITÉ DE LIDAR DOTÉE D'UN ÉLÉMENT OPTIQUE DIFFRACTIF

(43) Date of publication of application: 04.10.2023
(73) Proprietor: Robert Bosch GmbH, 70442 Stuttgart (DE)
(72) Inventor: Barbosa, Pedro, 4650-707 Felgueiras (PT); Albuquerque, Andre, 3550-165 Penalva do Castelo (PT); Correia, Alexandre, 4560-779 Penafiel (PT); Cerquido, Monica, 4905-130 Palme Barcelos (PT)

(56) References cited:
- EP-A1- 3 742 199
- WO-A1-2021/234333
- US-A1- 2019 310 374

## Description

The present invention relates to a lidar unit having a diffractive optical element. The invention also relates to a vehicle having a diffractive optical element.

### State of the art

A number of driver assistance systems for vehicles rely on the detection of surrounding objects. One system for detecting objects in the vehicle's environment is lidar. The lidar can determine the distance to an object by emitting a lidar beam into the environment, reflecting it off an object and detecting it again by the lidar itself. The time of flight of the emitted lidar beam can be used to infer the distance of the object reflecting the lidar beam. Since the assistance systems depend on detailed resolutions of the distance of the objects in the environment, the laser beam must first be displaced at small intervals in a first direction, for example horizontally, and then be displaced in a second direction, for example vertically, and repeat the horizontal scanning process in order to obtain a complete image of the environment. For each scan in one direction, a mechanism is needed to pivot the emitted lidar beam. Current systems use various mechanisms such as microlenses or mirrors to deflect the laser light along one direction.

EP 3 742 199 A1 discloses a lidar and a working method thereof. The lidar comprises a beam splitting apparatus, which splits a first laser beam into multiple second laser beams so that the multiple second laser beams are obtained through one laser emitter. In this way, the quantity of laser emitters is greatly reduced, thereby reducing costs and installation difficulty of the lidar. The lidar has a relatively high angle of view and angular resolution.

US 2019 310 374 A1 discloses an optical system for automated vision and detection. The optical system includes a light source configured to emit a beam into an environment and a first diffractive optical element. The beam passes through the first diffractive optical element, resulting in a plurality of beams. One or more of the plurality of beams are reflected by the environment, resulting in reflected beams. A second diffractive optical element of the optical system is configured to receive the reflected beams. A detector in alignment with the second diffractive optical element receives the reflected beams. The detector is configured to determine wave data from the reflected beams and generate a plurality of phasorgrams in a single image representing the wave data. The optical system also includes a processor configured to receive the single image and generate a representation of the environment. A control computer is configured to receive the representation of the environment from the processor.

WO 2021 234 333 A1 discloses a time-of-flight sensor system comprising: an illumination source for illuminating a subject to which a time-of-flight is to be measured; an optical system configured to, using an at least one actuator, transition the illumination source between providing spot illumination and flood illumination; and a sensor comprising a sensor surface. The sensor surface is configured to sense light scattered by the subject from the illumination source and to provide data dependent on sensed light. The spot illumination has a spatially non-uniform intensity over the sensor surface, and the optical system is configured to move the spot illumination across at least part of the sensor surface to generate an output frame, wherein the at least one actuator comprises at least one shape memory alloy component.

### Disclosure of the invention

The lidar unit according to the invention comprises a laser light source, a receiver unit, a first optical system and a housing. The laser light source is adapted to emit a laser light along a first spatial direction.

Moreover, the first optic and the laser light source are arranged in the housing such that the laser light is guided to the first optic before leaving the housing. Further, the receiving unit is configured to receive and evaluate the laser light. Furthermore, the first optic is configured to split the laser light along a second spatial direction, wherein the second spatial direction is not identical to the first spatial direction. In addition, the housing is rotatable about an axis of rotation so that the laser light can be pivoted along a third spatial direction. Here, the third spatial direction is not identical to the second spatial direction and/or the rotation axis is not orthogonal to the second spatial direction.

By this arrangement, a surface can be scanned by means of the lidar, requiring only one rotational movement, namely the rotation of the housing of the lidar about a rotational axis, which is not orthogonal to the second spatial axis. By splitting the laser beam by the first optic along a second spatial direction, a one-dimensional vector of the laser light is emitted into the vicinity of the lidar instead of a single laser light spot. An additional scanning of the second spatial directions along the vector of the emitted laser light, as it would be necessary with a simple emitted laser light spot, is omitted in this arrangement. Thus, a complex apparatus for redirecting the laser light emitted by the laser light source along the second spatial direction is not necessary. By orienting the axis of rotation of the housing so that the axis of rotation is not orthogonal to the second spatial direction, the rotation of the housing and thus the one-dimensional laser light vector generated by the first optic is moved in a spatial direction other than the second spatial direction so that the laser light vector sweeps over a surface. Similarly to the emitted one-dimensional laser light vector, the receiving unit is also designed as a one-dimensional vector in order to detect and evaluate the reflected one-dimensional laser light vector.

Furthermore, the first optical element is designed as a diffractive optical element and has a first matrix pattern. By the first matrix pattern, the laser light emitted from the laser light source can be converted into a predetermined pattern. Thus, the laser light initially emitted by the laser light source in a point-like laser light can be converted into a plurality of vector-shaped laser lights arranged side by side. In this case, the vector-shaped laser lights of the plane spanned by the second spatial direction and third spatial direction can be arranged next to each other as desired and can be vector-shaped along the second spatial direction and/or the third spatial direction. Also conceivable are straight as well as curved or round courses of the vectors of the laser light along the second spatial direction or the third spatial direction emitted into the environment. Likewise, the emitted laser light can be emitted as a two-dimensional-array into the environment from the first optic. In addition, the emitted laser light may be emitted as a continuous laser light or as a laser light divided into discrete spots into the environment downstream of the first optic. In particular, when the laser light is discretely divided into a plurality of spots, the number of spots and the distribution of the spots along the second spatial direction and third spatial direction may be influenced by the matrix pattern.

The receiving unit has a third optic, wherein the third optic is arranged between an incident laser light of the receiving unit and the evaluation unit. Further, the third optic is configured as a diffractive optical element and has a second matrix pattern corresponding to the first matrix pattern. By a third optic having a second matrix pattern corresponding to the first matrix pattern, the reflected laser light spots leave the third optic in the same arrangement as the laser light spots left the first optic. In this same arrangement, the laser light spots subsequently hit the evaluation unit and can be assigned to the emitted laser light spots leaving the first optic. This allows an accurate and simple analysis of the time of flight of each spot of the laser light that has left the first optic. From this, the distance of the reflecting object can be easily and reliably determined for each individual laser light spot.

In particular, the laser light source can comprise one or more lasers so that a stronger laser light intensity is available. By having a larger number of lasers in the laser light source, a higher intensity of the laser light can be achieved after splitting by the first matrix pattern. This allows the lidar unit to have a longer range and to detect objects with low reflectivity of the laser light.

The subclaims show preferred embodiments of the invention.

Preferably, the first matrix pattern has at least a first partitioning element and a second partitioning element. Here, the first partitioning element and the second partitioning element are arranged adjacent to each other at least in a third spatial direction. In addition, the first partitioning element and the second partitioning element are configured to split laser light into individual laser light spots along the second spatial direction and to emit the laser light spots of the first partitioning element offset from the laser light spots of the second partitioning element at least in the second spatial direction.

By offsetting the laser light points of the first partitioning element to the laser light points of the second partitioning element, the resolution of the objects in the environment can be increased compared to a first optic with only one partitioning element, without significant additional effort or cost.

In particular, the first optic can have more than two partitioning elements to increase the resolution of the objects in the environment. By splitting the laser light into discrete laser light spots, the receiving unit can be adapted to the array of laser light spots emitted by the first optic and simplified compared to a continuous laser light beam. The reason bein, that less detector elements are needed detecting the incident laser light spots, compared to a continuous incident laser light.

In this regard, the individual partitioning elements may have different characteristics with respect to the distribution of the laser light spots. For example, the partitioning elements can distribute the laser light spots unevenly over the second spatial direction, e.g. the laser light spots in the center of a partitioning element could be closer to each other than at the edge region of the partitioning element. Likewise, the dividing elements could have different distributions of the laser light points among themselves along the second spatial direction. Likewise, the partitioning elements could have different extensions in the second spatial direction.

Particularly preferably, the first dividing element and the second dividing element each divide the laser light into an equal number of uniformly distributed laser light spots.

Thus, an image with uniform resolution of the environment can be received and evaluated by the receiving unit.

Preferably, the first optic is transmissive and/or reflective.

By choosing between a transmissive or reflective first optic, the position of the first optic in the housing can be adapted to the spatial requirements of the housing. For example, if the path of the laser light through the housing is as straight as possible, the use of a transmissive optic is suitable. In the case of a desired redirection of the laser light in the housing out of the first spatial direction, a reflective first optic can be selected.

Preferably, at least one second optic is interposed between the laser light source and the first optic, the second optic directing the laser light as collinear light onto the first optic. Diffractive optical elements have the property that the emerging beams are of equal intensity when the diffractive element is uniformly illuminated with beams of equal intensity. By means of the second optic, an even distribution of the emitted laser light along the second spatial direction can be implemented, so that the first optic is uniformly illuminated with laser light. Through this, the first optic emits laser light spots of equal intensity. Thus, when evaluating the reflected laser light in the receiving unit, the intensity of the reflected laser light points can be measured in addition to the time-of-flight of the laser light, and the reflectivity of the reflecting object can be inferred from this.

In addition to the second optic, further optical elements can be provided in the path of the laser light. Thus, additional optical elements with reflective or transmissive properties can be used to redirect or convert the laser light. The additional optical elements could deflect, diffract, change the polarization of the laser light or filter for certain wavelengths of laser light. Likewise, a protective glass may be provided between the first optic and the housing, so that the laser light leaves the housing though the protective glass.

Preferably, the receiving unit has at least one evaluation unit for evaluating the incident laser light. In particular, the evaluation unit is designed as a photodetector matrix. This enables simple and inexpensive detection of the reflected laser light and the intensity of the laser light.

Particularly preferably, the third optic is transmissive and/or reflective. By choosing between a transmissive or reflective first optic, the position of the first optic in the housing can be adapted to the spatial requirements of the housing. For example, if the path of the laser light through the housing is as straight as possible, the use of a transmissive optic is suitable. In the case of a desired redirection of the laser light in the housing out of the first spatial direction, a reflective first optic can be selected.

Particularly preferably, a fourth optic is interposed in the receiving unit between the incident laser light spots of the receiving unit and the third optic. The fourth optic transmits the incident laser light spots as collinear laser light spots to the third optic. Due to the fourth optic, the reflected laser light spots leave the fourth optic uniformly aligned and hit the third optic uniformly aligned. This ensures that the third optic is uniformly illuminated. By uniformly illuminating the third optic it is ensured, that regardless of the original scattering of the reflected laser light spots, the spots of the laser light leaving the third optic over time have remain in the same arrangement and incident on the evaluation unit in this over time constant arrangement.

In addition to the fourth optic, other optical elements can be provided in the path of the laser light in the receiving unit. Thus, optical elements with reflective or transmissive properties can be used. The additional optical elements can deflect or diffract the laser light, change the polarization of the laser light, or filter for certain wavelengths. For example, a protective glass may be provided between the fourth optic and the housing through which the reflected laser light spots enter the housing. Likewise, a bandpass filter can be provided between the protective glass and the third optic or the fourth optic, so that only the reflected laser light spots are transmitted and other interference sources are filtered out.

Particularly preferably, the pattern of the photodetector matrix corresponds to the emitted pattern of the laser light after the third optic. This means that photodetectors are only present at those points in the photodetector matrix at which a light spot also arrives. This eliminates the need for additional photodetectors in the photodetector matrix and saves material and manufacturing costs. In addition, the effort required for evaluation and post-processing of the detected signals is substantially reduced.

The invention further comprises a motor vehicle comprising a lidar unit according to any of the previous embodiments.

### Brief description of the drawings.

In the following, embodiments of the invention are described in detail with reference to the accompanying drawing. In the drawing is:
- Figure 1: a schematic view of a lidar unit according to an embodiment of the invention,
- Figure 2: a schematic view of a first optic and a second optic of the lidar unit according to the embodiment of the invention with a first matrix pattern,
- Figure 3: a schematic view of a first optic and a second optic of the lidar unit according to the embodiment example of the invention with an alternative matrix pattern.

### Embodiments of the invention

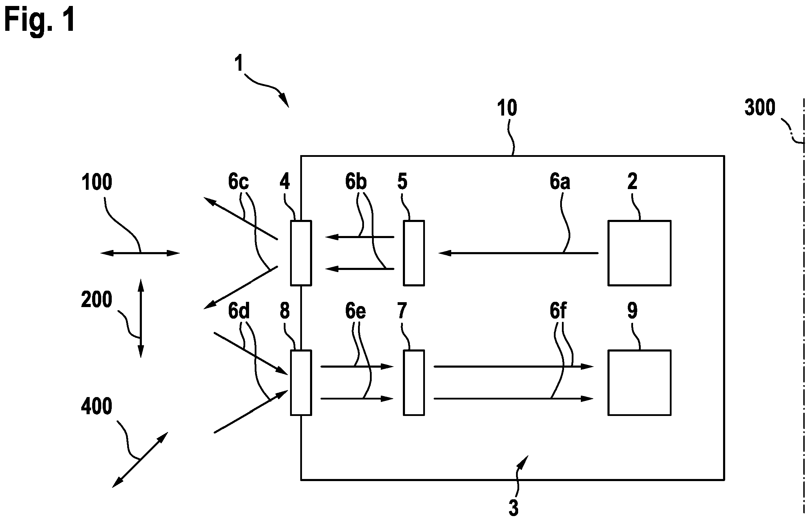

Figure 1 shows a schematic view of a lidar unit 1 according to an embodiment of the invention. The lidar unit 1 comprises a housing 10 in which at least a laser light source 2, a first optic 4, a second optic 5 and a receiver unit 3 are arranged. The laser light source 2 is configured to emit laser light 6a. In particular, the laser light source 2 may comprise one or more lasers. The laser light source 2 emits a laser light 6a in a first spatial direction 100. The laser light 6a first passes through the second optic 5, is further guided by the second optic 5 to the first optic 4 and leaves through the first optic 4 the housing 10. The second optic 5 is configured to guide the laser light 6a as collinear laser light 6b to the first optic 4. The first optic 4 is formed as a diffractive optical element and has a first matrix pattern 4a, which splits the laser light 6b along a second spatial direction 200. Here, the second spatial direction 200 does not correspond to the first spatial direction 100, in particular, the second spatial direction 200 is orthogonal to the first spatial direction 100.

Diffractive optical elements have the property that the emerging beams are of equal intensity when the diffractive optical element is uniformly illuminated with beams of equal intensity. The second optic 5 can ensure an even spatial distribution of the laser light 6b with an even intensity distribution along the second spatial direction 200, so that the first optic 4 is uniformly illuminated with laser light 6b. From this, the first optic 4 generates laser light spots 6c of equal intensity. This can be used to determine the reflectivity of an object illuminated by the laser light spots.

Furthermore, the housing 10 and thus the emitted laser light 6c can be pivoted about a rotation axis 300. Here, the rotation axis 300 is not oriented orthogonally to the second spatial direction 200. In particular, the axis of rotation 300 corresponds to the second spatial direction 200. Here, the housing 10 may be arranged on a motor vehicle, not shown here, so that the housing 10 is pivotable relative to the motor vehicle. By this arrangement, a surface can be scanned by means of the lidar unit 1, requiring only a rotational movement, namely the rotation of the housing 10 of the lidar unit 1 about the axis of rotation 300, which is not orthogonal to the second spatial direction 200. By splitting the laser light 6b by the first optic 4 along a second spatial direction 200, instead of a single laser light spot, a one-dimensional vector of the laser light spots 6c is emitted into the surroundings of the lidar unit 1. An additional scanning of the second spatial directions 200 along the vector of the emitted laser light spots 6c, as it would be necessary with a simple emitted single point laser light, is omitted in this arrangement. Thus, a complex apparatus for redirecting the laser light 6a, 6b emitted by the laser light source 2 along the second spatial direction 200 is also omitted. By orienting the axis of rotation 300 of the housing 10 so that the axis of rotation 300 is not orthogonal to the second spatial direction 200, when the housing 10 and thus the one-dimensional vector of laser light 6c generated by the first optic 4 is rotated, the laser light 6c is moved in a spatial direction, in this case the third spatial direction 400, other than the second spatial direction 200, so that the vector of laser light 6c sweeps a surface over time.

The first optic 4 may be transmissive, so that the laser light 6b travels through the first optic 4. Alternatively, the first optic 4 may be reflective, so that the laser light 6b coming from the second optic 5 does not travel through the first optic 4, but is reflected. The laser light spots 6c either reflected by the first optic 4 or migrated through the first optic 4 subsequently leaves the housing 10 and is emitted into the environment of the lidar unit 1. The emitted laser light spots 6c are reflected by objects in the environment.

The reflected laser light spots 6d are picked up, detected and evaluated by the receiver unit 3. For this purpose, the receiving unit 3 has a third optic 7, a fourth optic 8 and an evaluation unit 9. The reflected laser light spots 6d first strikes the fourth optic 8 and are transmitted through the fourth optic 8 to the third optic 7. The laser light spots 6e pass through the fourth optic 8 or are reflected by the third optic 7 and are forwarded from the third optic 7 to the evaluation unit 9. The evaluation unit 9 detects and evaluates the laser light spots 6f with respect to the time of flight and there intensity. From the time of flight of the individual laser light spots 6f, the distance to the objects reflecting the individual laser light spots 6c can be concluded. Since the laser light spots 6c all leave the first optic 4 with the same intensity, the reflectivity of the object at which the individual laser light spots 6c were reflected can be concluded by evaluating the intensity of the reflected laser light spots 6f arriving at the evaluation unit. For this purpose, the evaluation unit 9 comprises photodetectors arranged on a photodetector matrix.

The fourth optic 8 aligns the reflected laser light spots 6d arriving at the housing 10, so that the points of the laser light 6d leave the fourth optic 8 collinearly and enter collinearly the third optic 7. The third optic 7 is designed as a diffractive optical element and has a second matrix pattern 7a. Here, the second matrix pattern 7a is configured identically to the first matrix pattern 4a, so that the laser light spots 6e coming from the fourth optic 8 leave the fourth optic 7 in the same arrangement as the laser light spots 6c leave the first optic 4. In this arrangement, the reflected laser light spots 6f impinge on the evaluation unit 9.

Furthermore, the pattern of the photodetector matrix of the evaluation unit 9 corresponds to the emitted pattern of the laser light spots 6f after the third optic 7, so that photodetectors are only present at the points in the photodetector matrix at which a laser light spot 6f also arrives. This eliminates the need for further photodetectors in the photodetector matrix and saves on material and manufacturing costs. In addition, the effort for evaluation and post-processing of the detection signals of the evaluation unit is reduced.

Furthermore, further optical elements may be provided in the path of the laser light spots 6a-6f inside the housing 10. In particular, further optical elements may deflect or polarize the laser light spots 6a-6f or and compress or stretch the arrangement of laser light spots 6a-6f. The further optical elements may be arranged both in the path of the emitted laser light 6a and in the path of the reflected laser light spots 6d.

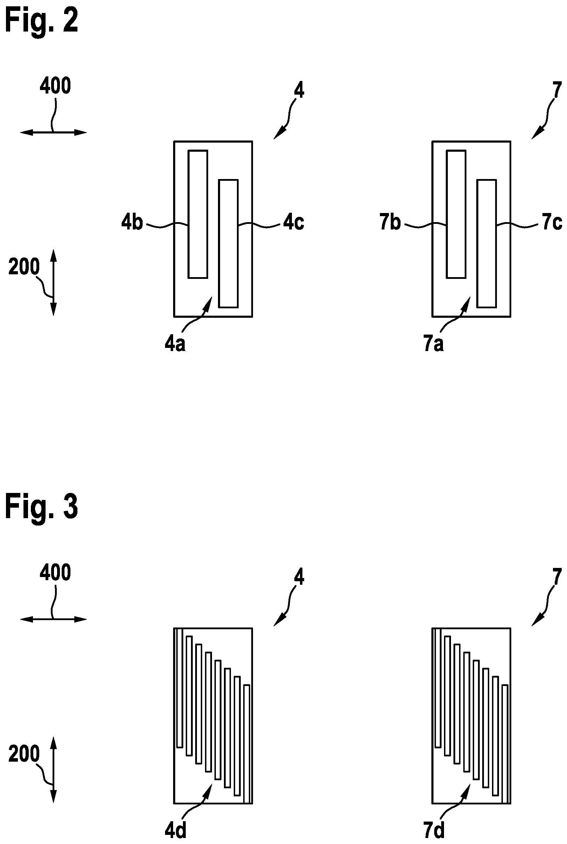

Figure 2 shows a schematic view of a first optic 4 and a third optic 7 according to the embodiment of the invention. The matrix pattern 4a of the first optic 4 has at least a first partitioning element 4b and a second partitioning pattern 4c. The first partitioning element 4b and the second partitioning element 4c are each configured to split the laser light 6b into a plurality of individual spots along the second spatial direction 200. The first partitioning element 4b and the second partitioning element 4c are arranged adjacent to each other along the third spatial direction 400 and offset from each other at least along the second spatial direction 200. Here, the laser light spots 6c are divided and the first partitioning element 4b and the second partitioning element 4c are offset from each other along the second spatial direction 200 such that the spots of the laser light 6c of the second partitioning element 4b are located between the spots of the laser light 6c of the first partitioning element 4c along the second spatial direction 200.

In particular, the first partitioning element 4b and the second partitioning element 4c split the laser light 6b into an equal number of laser light spots 6c. Here, the spots of the laser light 6c are uniformly distributed over the extent of the first partitioning element 4b and the second partitioning element 4c, respectively. In particular, the first partitioning element 4b and the second partitioning element 4c are offset from each other along the second spatial direction such that the laser light spots 6c of the first partitioning element 4b and the laser light spots 6c of the second partitioning element 4c are emitted from the first optic 4 at equal intervals alternately along the second spatial direction 200.

The third optic 7 has a second matrix pattern 7a analogous to the first matrix pattern 4a of the first optic 4. Wherein the second matrix pattern 7a has a third partitioning element 7b and a fourth partitioning element 7c. The laser light 6f exits the second matrix pattern 7a in the same arrangement as the laser light 6c exits the first optic 4.

Figure 3 shows a schematic view of a first optic 4 and a third optic 7 according to the embodiment of the invention with an alternative matrix pattern 4d, 7d. Here, the first optic 4 and the third optic 7 have the same basic structure and the same relationships as the embodiment of the first matrix pattern 4a and the second matrix pattern 7a in Figure 2. However, the first matrix pattern 4d of the first optic 4 and the second matrix pattern 7d of the third optic 7 each have eight partitioning elements. By having a higher number of partitioning elements, a higher resolution in the second spatial direction 200 can be achieved. The resolution of the evaluation unit 9 must be adapted accordingly to the alternative embodiment of the first matrix pattern 4a and the second matrix pattern 7a in order to detect and evaluate the individual points of the laser light 6f. However, the invention is not limited to this number of partitioning elements and can be implemented with any number of partitioning elements.

## Claims

1. A Lidar unit (1) comprising:
- a laser light source (2);
- a receiver unit (3);
- a first optic (4); and
- a housing (10), wherein
- the laser light source (2) is capable of emitting a laser light (6a) along a first spatial direction (100);
- the first optic (4) and the laser light (2) source are arranged in the housing (10) such that the laser light (6b) is guided to the first optic (4) before leaving the housing (10);
- the receiving unit (3) is designed to receive and evaluate the laser light (6c);
- the first optic (4) is designed to split the laser light (6b) along a second spatial direction (200);
- the second spatial direction (200) is not identical to the first spatial direction (100);
- the housing (10) is rotatable about an axis of rotation (300) so that the laser light (6c) can be pivoted along a third spatial direction (400);
- the third spatial direction (400) is not identical with the second spatial direction (200) and/or the axis of rotation (300) is not orthogonal to the second spatial direction (200);
- the first optic (4) is formed as a diffractive optical element,
- the first optic (4) has a first matrix pattern (4a), and
- the receiving unit (3) has a third optical system (7), wherein
- the third optic (7) is arranged between a laser light (6d) incident to the receiving unit and the evaluation unit (9); and
- the third optic (7) is implemented as a diffractive optical element and has a second matrix pattern (7a), **characterized in that**
- the second matrix pattern (7a) corresponds to the first matrix pattern (4a).

2. The lidar unit (1) according to claim 1, **characterized in that** the first matrix pattern (4a) comprises at least a first partitioning element (4b) and a second partitioning element (4c), wherein
- the first partitioning element (4b) and the second partitioning element (4c) are arranged adjacent to each other at least in the third spatial direction (400)
- the first partitioning element (4b) and the second partitioning element (4c) are adapted to split laser light (6b) into individual laser light spots (6c) along the second spatial direction (200), and
- the laser light spots (6c) of the first partitioning element (4b) are offset from the laser light spots (6c) of the second partitioning element (4c) at least in the second spatial direction (200).

3. Lidar unit (1) according to claim 2, **characterized in that** the first partitioning element (4b) and the second partitioning element (4c) each divide the laser light (6b) into an equal number of uniformly distributed laser light spots (6c).

4. Lidar unit (1) according to any one of the preceding claims, **characterized in that** the first optic (4) is transmissive and/or reflective.

5. Lidar unit (1) according to one of the previous claims, **characterized in that** at least one second optic (5) is interposed between the laser light source (2) and the first optic (4), the second optic (5) directing the laser light (6a) as collinear laser light (6b) onto the first optic (4).

6. Lidar unit (1) according to one of the previous claims, **characterized in that** the receiving unit (3) has at least one evaluation unit (9) for evaluating incident laser light (6f), in particular the evaluation unit (9) is designed as a photodetector matrix.

7. Lidar unit (1) according to claim 6, **characterized in that** the third optical element (7) is transmissive and/or reflective.

8. Lidar unit (1) according to one of the previous claims 6 or 7, **characterized in that** a fourth optic (8) is interposed between the laser light (6d) incident to the receiving unit (3) and the third optic (7), the fourth optic (8) forwarding the incident laser light (6d) as collinear laser light (6e) to the third optic (7).

9. Lidar unit (1) according to any of the preceding claims 6 to 8, **characterized in that** the pattern of the photodetector matrix corresponds to the emitted pattern of the laser light (6f) after the third optic (7).

10. A motor vehicle comprising a lidar unit (1) according to any one of the preceding claims.

## Patentansprüche

1. Lidareinheit (1), die Folgendes umfasst:
- eine Laserlichtquelle (2);
- eine Empfängereinheit (3);
- eine erste Optik (4); und
- ein Gehäuse (10), wobei
- die Laserlichtquelle (2) Laserlicht (6a) in einer ersten Raumrichtung (100) abstrahlen kann;
- die erste Optik (4) und die Laserlichtquelle (2) im Gehäuse (10) derart angeordnet sind, dass das Laserlicht (6b) zur ersten Optik (4) geführt wird, bevor es das Gehäuse (10) verlässt;
- die Empfangseinheit (3) ausgelegt ist, das Laserlicht (6c) zu empfangen und zu bewerten;
- die erste Optik (4) ausgelegt ist, das Laserlicht (6b) in einer zweiten Raumrichtung (200) zu teilen;
- die zweite Raumrichtung (200) mit der ersten Raumrichtung (100) nicht identisch ist;
- das Gehäuse (10) um eine Drehachse (300) drehbar ist, derart, dass das Laserlicht (6c) in einer dritten Raumrichtung (400) geschwenkt werden kann;
- die dritte Raumrichtung (400) mit der zweiten Raumrichtung (200) nicht identisch ist und/oder die Drehachse (300) zur zweiten Raumrichtung (200) nicht senkrecht ist;
- die erste Optik (4) als ein optisches Beugungselement gebildet ist,
- die erste Optik (4) ein erstes Matrixmuster (4a) aufweist und
- die Empfangseinheit (3) ein drittes optisches System (7) aufweist, wobei
- die dritte Optik (7) zwischen einem Laserlicht (6d), das auf die Empfangseinheit einfällt, und der Bewertungseinheit (9) angeordnet ist und
- die dritte Optik (7) als ein optisches Beugungselement implementiert ist und ein zweites Matrixmuster (7a) aufweist, **dadurch gekennzeichnet, dass**
- das zweite Matrixmuster (7a) dem ersten Matrixmuster (4a) entspricht.

2. Lidareinheit (1) nach Anspruch 1, **dadurch gekennzeichnet, dass** das erste Matrixmuster (4a) mindestens ein erstes Partitionierungselement (4b) und ein zweites Partitionierungselement (4c) umfasst, wobei
- das erste Partitionierungselement (4b) und das zweite Partitionierungselement (4c) mindestens in der dritten Raumrichtung (400) benachbart zueinander angeordnet sind,
- das erste Partitionierungselement (4b) und das zweite Partitionierungselement (4c) ausgelegt sind, Laserlicht (6b) entlang der zweiten Raumrichtung (200) in einzelne Laserlichtpunkte (6c) zu teilen, und
- die Laserlichtpunkte (6c) des ersten Partitionierungselements (4b) von den Laserlichtpunkten (6c) des zweiten Partitionierungselements (4c) mindestens in der zweiten Raumrichtung (200) versetzt sind.

3. Lidareinheit (1) nach Anspruch 2, **dadurch gekennzeichnet, dass** das erste Partitionierungselement (4b) und das zweite Partitionierungselement (4c) jeweils das Laserlicht (6b) in eine gleiche Anzahl gleichförmig verteilter Laserlichtpunkte (6c) aufzuteilen.

4. Lidareinheit (1) nach einem der vorhergehenden Ansprüche, **dadurch gekennzeichnet, dass** die erste Optik (4) durchlässig und/oder reflektierend ist.

5. Lidareinheit (1) nach einem der vorhergehenden Ansprüche, **dadurch gekennzeichnet, dass** mindestens eine zweite Optik (5) zwischen der Laserlichtquelle (2) und der ersten Optik (4) angeordnet ist, wobei die zweite Optik (5) das Laserlicht (6a) als kollineares Laserlicht (6b) auf die erste Optik (4) richtet.

6. Lidareinheit (1) nach einem der vorhergehenden Ansprüche, **dadurch gekennzeichnet, dass** die Empfangseinheit (3) mindestens eine Bewertungseinheit (9) zum Bewerten einfallenden Laserlichts (6f) aufweist, wobei insbesondere die Bewertungseinheit (9) als eine Fotodetektormatrix ausgelegt ist.

7. Lidareinheit (1) nach Anspruch 6, **dadurch gekennzeichnet, dass** das dritte optische Element (7) durchlässig und/oder reflektierend ist.

8. Lidareinheit (1) nach einem der vorhergehenden Ansprüche 6 oder 7,
**dadurch gekennzeichnet, dass** eine vierte Optik (8) zwischen dem Laserlicht (6d), das auf die Empfangseinheit (3) einfällt, und der dritten Optik (7) angeordnet ist, wobei die vierte Optik (8) das einfallende Laserlicht (6d) als kollineares Laserlicht (6e) zur dritten Optik (7) weiterleitet.

9. Lidareinheit (1) nach einem der vorhergehenden Ansprüche 6 bis 8, **dadurch gekennzeichnet, dass** das Muster der Fotodetektormatrix dem abgestrahlten Muster des Laserlichts (6f) nach der dritten Optik (7) entspricht.

10. Motorfahrzeug, das eine Lidareinheit (1) nach einem der vorhergehenden Ansprüche umfasst.

## Revendications

1. Unité LIDAR (1) comprenant :
- une source de lumière laser (2) ;
- une unité de réception (3) ;
- une première optique (4) ; et
- un boîtier (10), dans laquelle
- la source de lumière laser (2) peut émettre une lumière laser (6a) le long d'une première direction spatiale (100) ;
- la première optique (4) et la source de lumière laser (2) sont disposées dans le boîtier (10) de sorte que la lumière laser (6b) est guidée jusqu'à la première optique (4) avant de quitter le boîtier (10) ;
- l'unité de réception (3) est conçue pour recevoir et évaluer la lumière laser (6c) ;
- la première optique (4) est conçue pour séparer la lumière laser (6b) le long d'une deuxième direction spatiale (200) ;
- la deuxième direction spatiale (200) n'est pas identique à la première direction spatiale (100) ;
- le boîtier (10) est rotatif autour d'un axe de rotation (300), de sorte qu'on peut faire pivoter la lumière laser (6c) le long d'une troisième direction spatiale (400) ;
- la troisième direction spatiale (400) n'est pas identique à la deuxième direction spatiale (200) et/ou l'axe de rotation (300) n'est pas orthogonal à la deuxième direction spatiale (200) ;
- la première optique (4) se présente sous la forme d'un élément optique diffractif,
- la première optique (4) présente un premier motif matriciel (4a), et
- l'unité de réception (3) comporte un troisième système optique (7), dans laquelle
- la troisième optique (7) est disposée entre une lumière laser (6d) incidente sur l'unité de réception et l'unité d'évaluation (9) ; et
- la troisième optique (7) est mise en œuvre sous la forme d'un élément optique diffractif et présente un deuxième motif matriciel (7a), **caractérisée en ce que**
- le deuxième motif matriciel (7a) correspond au premier motif matriciel (4a).

2. Unité LIDAR (1) selon la revendication 1, **caractérisée en ce que** le premier motif matriciel (4a) comprend au moins un premier élément de séparation (4b) et un deuxième élément de séparation (4c), dans laquelle
- le premier élément de séparation (4b) et le deuxième élément de séparation (4c) sont disposés au voisinage l'un de l'autre au moins dans la troisième direction spatiale (400),
- le premier élément de séparation (4b) et le deuxième élément de séparation (4c) sont adaptés pour séparer la lumière laser (6b) en taches de lumière laser individuelles (6c) le long de la deuxième direction spatiale (200), et
- les taches de lumière laser (6c) du premier élément de séparation (4b) sont décalées des taches de lumière laser (6c) du deuxième élément de séparation (4c) au moins dans la deuxième direction spatiale (200).

3. Unité LIDAR (1) selon la revendication 2, **caractérisée en ce que** le premier élément de séparation (4b) et le deuxième élément de séparation (4c) divisent chacun la lumière laser (6b) en un nombre égal de taches de lumière laser (6c) réparties uniformément.

4. Unité LIDAR (1) selon l'une quelconque des revendications précédentes, **caractérisée en ce que** la première optique (4) est transmissive et/ou réfléchissante.

5. Unité LIDAR (1) selon une des revendications précédentes, **caractérisée en ce qu'**au moins une deuxième optique (5) est intercalée entre la source de lumière laser (2) et la première optique (4), la deuxième optique (5) dirigeant la lumière laser (6a) sous forme de lumière laser colinéaire (6b) sur la première optique (4).

6. Unité LIDAR (1) selon une des revendications précédentes, **caractérisée en ce que** l'unité de réception (3) comporte au moins une unité d'évaluation (9) destinée à évaluer la lumière laser incidente (6f), en particulier l'unité d'évaluation (9) est conçue comme une matrice de photodétecteurs.

7. Unité LIDAR (1) selon la revendication 6, **caractérisée en ce que** le troisième élément optique (7) est transmissif et/ou réfléchissant.

8. Unité LIDAR (1) selon une des revendications 6 et 7 précédentes, **caractérisée en ce qu'**une quatrième optique (8) est intercalée entre la lumière laser (6d) incidente sur l'unité de réception (3) et la troisième optique (7), la quatrième optique (8) acheminant la lumière laser incidente (6d) sous forme de lumière laser colinéaire (6e) jusqu'à la troisième optique (7).

9. Unité LIDAR (1) selon l'une quelconque des revendications 6 à 8 précédentes, **caractérisée en ce que** le motif de la matrice de photodétecteurs correspond au motif émis de la lumière laser (6f) après la troisième optique (7).

10. Véhicule à moteur comprenant une unité LIDAR (1) selon l'une quelconque des revendications précédentes.
